(19) Europäisches Patentamt
European Patent Office
Office européen des brevets

(11) Veröffentlichungsnummer : **0 298 901 B1**

(12) # EUROPÄISCHE PATENTSCHRIFT

(45) Veröffentlichungstag der Patentschrift : **15.01.92 Patentblatt 92/03**

(51) Int. Cl.$^5$ : **A01N 47/36,** // (A01N47/36, 43:76, 43:60, 43:42, 43:40)

(21) Anmeldenummer : **88710017.0**

(22) Anmeldetag : **06.07.88**

(54) **Herbizide Mittel.**

(30) Priorität : **10.07.87 DE 3722801**

(43) Veröffentlichungstag der Anmeldung : **11.01.89 Patentblatt 89/02**

(45) Bekanntmachung des Hinweises auf die Patenterteilung : **15.01.92 Patentblatt 92/03**

(84) Benannte Vertragsstaaten : **AT BE CH DE ES FR GB GR IT LI NL SE**

(56) Entgegenhaltungen :
**EP-A- 0 007 573**
**EP-A- 0 043 802**
**EP-A- 0 157 171**
**EP-A- 0 236 273**
**DE-A- 3 536 035**

(56) Entgegenhaltungen :
**US-A- 4 547 215**
**Research Disclosure, Band 262, Febr. 1986, Seiten 106-107, Ref. Nr. 26253; Havant, Harts, GB "Herbicidal compositions".**

(73) Patentinhaber : **HOECHST AKTIENGESELLSCHAFT**
**Postfach 80 03 20**
**W-6230 Frankfurt am Main 80 (DE)**

(72) Erfinder : **Schumacher, Hans, Dr.**
**Claudiusstrasse 4**
**W-6093 Flörsheim am Main (DE)**
Erfinder : **Huff, Hans Philipp, Dr.**
**Eberlestrasse 18**
**W-6239 Eppstein/Taunus (DE)**
Erfinder : **Hacker, Erwin, Dr.**
**Margarethenstrasse 16**
**W-6203 Hochheim am Main (DE)**

EP 0 298 901 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung sind herbizide Mittel, die gekennzeichnet sind durch einen wirksamen Gehalt einer Verbindung der Formel I, deren Salz oder deren Stereoisomere

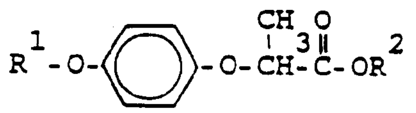

(I),

worin

$R^1$ = einen heterocyclischen Rest der Formel

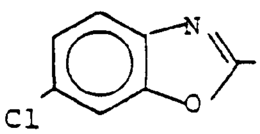

und

$R^2$ = H, ($C_1$-$C_4$) Alkyl, das durch ($C_1$-$C_4$) Alkoxy substituiert sein kann, oder ($C_2$-$C_4$) Alkinyl, bedeuten, in Kombination mit einer Sulfonylharnstoffverbindung der Formel II oder deren Salz

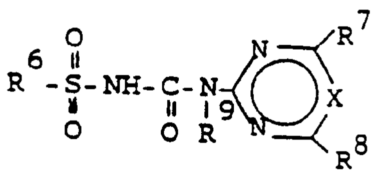

(II),

worin

$R^6$ = einen Rest der Formel

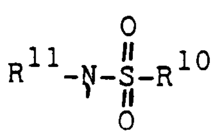

oder Phenyl, das durch ($C_1$-$C_4$) Alkyl, Halogen, halogeniertes ($C_1$-$C_4$) Alkoxy oder ($C_1$-$C_4$) Alkoxycarbonyl substituiert ist, oder Thienyl, das durch ($C_1$-$C_4$) Alkoxycarbonyl substituiert ist,

$R^7$, $R^8$ = unabhängig voneinander ($C_1$-$C_4$) Alkyl oder ($C_1$-$C_4$) Alkoxy,

$R^9$ = ($C_1$-$C_4$) Alkyl oder Wasserstoff,

$R^{10}$ = ($C_1$-$C_6$) Alkyl, ($C_2$-$C_6$) Alkenyl, ($C_2$-$C_6$) Alkinyl oder ($C_1$-$C_6$) Alkyl, das durch ($C_1$-$C_4$) Alkoxy oder ($C_1$-$C_4$) Alkoxycarbonyl substituiert ist,

$R^{11}$ = H, ($C_1$-$C_6$) Alkyl, ($C_2$-$C_6$) Alkenyl, ($C_2$-$C_6$) Alkinyl oder Cyclohexyl und

X = CH oder N bedeuten, mit Ausnahme der Kombination der Verbindung der Formel I, worin $R^2$ = $C_2H_5$ bedeutet, mit der Verbindung der Formel II, worin $R^6$ = 2-(2-Chlorethoxy)-phenyl, X = N, einer der Reste $R^7$ und $R^8$ Methyl und der andere Methoxy und $R^9$ = Wasserstoff bedeuten.

Die erfindungsgemäßen Herbizidkombinationen besitzen auffallend hohe Wirksamkeiten, die überraschenderweise wesentlich stärker sind, als von den Wirkungen der Einzelkomponenten zu erwarten war.

Die Einzelkomponenten der Formeln I und II und deren Verwendung als Herbizide sind bekannt.

Einige Verbindungen des Typs der Formel I sind in DE-PS 3536035 beschrieben. Von den Verbindungen der Formel I ist gemäß der Erfindung von besonderer Bedeutung das Herbizid 2-(4-(6-Chlorbenzoxazol-2-yloxy)phenoxy)-propionsäure-ethylester (Ia ; common name : Fenoxaprop-ethyl). Die Verbindung Ia wird in The Pesticide Manual, 8. Auflage, 1987, S. 379, 404, 453 und 737, British Crop. Protection Council, beschrieben.

Die Verbindungen der Formel I weisen im Propionsäureteil ein Asymmetriezentrum auf und können daher als reine Stereoisomeren oder Stereoisomerengemische vorliegen. Diese Isomeren und deren Gemische werden alle von vorliegender Erfindung umfaßt.

Die Verbindungen der Formel II mit $R^6$ = —$NR^{11}(SO_2R^{10})$ sind aus EP-A 0131258 bekannt. Hierbei sind diejenigen Verbindungen von besonderer Bedeutung, bei denen $R^{10}$ und $R^{11}$ ($C_1$-$C_6$) Alkyl, insbesondere Methyl und Ethyl, $R^7$, $R^8$ = $CH_3$ oder $OCH_3$ und X = CH bedeuten, beispielsweise die Verbindungen (IIa) : $R^7$, $R^8$ = $OCH_3$ ; $R^{10}$, $R^{11}$ = $CH_3$ oder (IIb) : $R^7$, $R^8$ = $OCH_3$, $R^{10}$ = $C_2H_5$, $R^{11}$ = $CH_3$.

Als Beispiele für Verbindungen der Formel II mit $R^6$ = substituiertem Phenyl oder Thienyl sind insbesondere zu nennen : Methyl-3-[(4-methoxy-6-methyl-1,3,5-triazin-2-yl)-aminocarbonyl-aminosulfonyl]-2-thiophencarboxylat (IIc ; DPX-M 6316), Methyl-2-[(4-methoxy-6-methyl-1,3,5-triazin-2-yl)-aminocarbonyl-aminosulfonyl] benzoat (IId ; Metsulfuron Methyl), 2-Chlor-N-((4-methoxy-6-methyl-1,3,5-triazin-2-yl) aminocarbonyl)-benzosulfonamid (IIe ; Chlorsulfuron), 2-(2-Chlorethoxy)-N-((4-methoxy-6-methyl-1,3,5-triazin-2-yl) aminocarbonyl)-benzosulfonamid (IIf ; CGA 131'036), Methyl-2-((3-(4-methoxy-6-methyl-1,3,5-triazin-2-yl)-3-methylaminocarbonyl)aminosulfonyl)benzoat (IIg ; DPX-L 5300), Methyl-2-[(4,6-dimethoxypyrimidin-2-yl)aminocarbonyl-aminosulfonyl-methyl]benzoat (IIh ; DPX-F 5384-81). Diese Verbindungen finden hauptsächlich als Herbizide in Getreidekulturen Anwendung und sind aus den Konferenzberichten "British Crop. Protection Conference — Weeds", Brighton, aus dem Jahr 1985 (Verbindung IIc : Bericht 1985/2-5/s. 49 ; Verbindung IIf : Bericht 1985/2-6/s. 55, 56 ; Verbindung IIg : Bericht 1985/2-4/s. 43), aus dem Konferenzbericht 1985 der "Asian-Pacific Weed Science Society" (Verb. IIh) und aus The Pesticide Manual, 8. Aufl. 1987, S. 182, 575 (Verb. IId und IIe) bekannt.

In der EP-A-0236273 ist eine Kombination von N-[2-(2-Chlorethoxy)-phenylsulfonyl]-N'-(4-methoxy-6-methyl-1,3,5-triazin-2-yl)-harnstoff mit 2-[4-(6-Chlorbenzoxazol-2-yloxy)-phenoxy]-propionsäureethylester als Herbizid bereits vorgeschlagen worden.

Die Verbindungen der Formel I können im Falle $R^2$ = H Salze bilden. Ebenso sind die Verbindungen der Formel II zur Salzbildung an einer freien NH-Gruppe befähigt. Als Salze der Verbindungen der Formel I und II kommen alle üblichen in der Landwirtschaft einsetzbaren Salze in Betracht. Hierzu zählen insbesondere Alkali (Na, K) Salze, Erdalkali (Ca, Mg) Salze und Ammoniumsalze, wobei Ammonium durch organische Reste wie insbesondere Alkyl oder Hydroxyalkyl ein- bis vierfach substituiert sein kann.

Es wurde nun gefunden, daß sich die erfindungsgemäßen Kombinationen durch eine überraschend hohe überadditive Wirksamkeit insbesondere in den Kulturen Weizen, Roggen, Gerste und Reis auszeichnen.

Die Komponenten der erfindungsgemäßen Kombinationen lassen sich innerhalb weiter Grenzen miteinander mischen, ohne daß die hohen Wirksamkeiten verloren gehen. Die Mischungsverhältnisse der Verbindungen der Formel I zu den Verbindungen der Formel II können im allgemeinen zwischen 15 : 1 bis 1 : 1, insbesondere zwischen 10 : 1 und 5 : 1 variieren.

Mit Hilfe der erfindungsgemäßen Mittel lassen sich zahlreiche Schadpflanzen in Nutzpflanzenkulturen wie z.B. Weizen, Roggen, Gerste und Reis vorteilhaft bekämpfen. Zu diesen Schadpflanzen zählen insbesondere monokotyle Unkräuter wie Alopecurus myosuroides, Avena fatua oder Setaria viridis und dikotyle Unkräuter wie Matricaria sp., Galium aparine, Sinapis arvense oder Polygonum sp.

Ein weiterer Gegenstand der vorliegenden Erfindung ist auch ein Verfahren zur Bekämpfung von Schadpflanzen in Nutzpflanzenkulturen, insbesondere in Weizen, Roggen, Gerste und Reis, das dadurch gekennzeichnet ist, daß man auf die Kulturpflanzen oder die Anbauflächen eine wirksame Menge einer Verbindung der Formel (I) in Kombination mit einer Verbindung der Formel (II) appliziert.

Die erfindungsgemäßen Kombinationen können jeweils in einer Dosierung im Bereich von 0,05 bis 2 kg Wirkstoff/ha eingesetzt werden. Die Aufwandmengen variieren insbesondere zwischen 0,05 und 1,0 kg/ha.

Die erfindungsgemäßen herbiziden Kombinationen können entweder als Tankmischungen, bei denen die Wirkstoffe erst unmittelbar vor der Applikation miteinander vermischt werden, oder als Fertigformulierungen zur Anwendung gebracht werden. Als Fertigformulierungen können sie in Form von benetzbaren Pulvern, emulgierbaren Konzentraten, versprübaren Lösungen, Stäubemitteln oder Granulaten formuliert sein und enthalten die üblichen Formulierungshilfsmittel wie Netz-, Haft-, Dispergiermittel, feste oder flüssige Inertstoffe sowie Mahlhilfsmittel oder Lösemittel.

Benetzbare Pulver sind in Wasser gleichmäßig dispergierbare Präparate, die neben dem oder den Wirkstoff(en) außer einem Verdünnungs- oder Inertstoff noch übliche Netzmittel wie polyoxyethylierte Alkylphenole, Polyvinylalkohol, polyoxyethylierte Oleyl- oder Stearylamine, Alkyl-, oder Alkylphenylsulfonate und übliche Dispergierhilfsmittel wie ligninsulfonsaures Natrium, Kalium oder Calcium, 2,2'-dinaphthyl-methan-6,6'-disulfonsaures Natrium oder auch oleoylmethyltaurinsaures Natrium enthalten.

Emulgierbare Konzentrate werden durch Auflösen des oder der Wirkstoffe(s) in einem organischen Lösemittel wie Butanol, Cyclohexanon, Dimethylformamid, Xylol oder auch höhersiedenden Aromaten und Zusatz eines nichtionischen Netzmittels, beispielsweise eines polyoxyethylierten Alkylphenols, eines polyoxethylierten Oleyl- oder Stearylamins oder eines Alkyl- oder Alkylphenylsulfonats, erhalten. Granulate können entweder durch Verdüsen des oder der Wirkstoffe(s) auf adsorptionsfähiges, granuliertes Inertmaterial hergestellt werden oder durch Aufbringen von Wirkstoffkonzentrationen mittels Klebemitteln wie Polyvinylalkohol, polacrylsaurem Natrium oder auch Mineralölen auf die Oberfläche von Trägerstoffen wie Sand, Kaolinite oder von granuliertem Inertmaterial.

Stäubemittel erhält man durch Vermahlen des Wirkstoffes mit fein verteilten, festen Stoffen, z.B. Talkum, natürlichen Tonen wie Kaolin, Bentonit, Pyrophillit oder Diatomenerde.

Die Konzentrationen der Wirkstoffe in den handelsüblichen Formulierungen können verschieden sein. In benetzbaren Pulvern variiert die Gesamtwirkstoffkonzentration zwischen etwa 20% und 90%, der Rest besteht aus den oben angegebenen Formulierungszusätzen. Bei emulgierbaren Konzentraten beträgt die Wirkstoffkonzentration etwa 10% bis 80%.

Zur Anwendung werden die handelsüblichen Konzentrate gegebenenfalls in üblicher Weise verdünnt, z.B. bei benetzbaren Pulvern und emulgierbaren Konzentraten mittels Wasser.

**Formulierungsbeispiele**

**Beispiel 1**

Ein Stäubemittel wird erhalten, indem man a) 10 GT (GT = Gewichtsteile) Wirkstoffe mit 90 GT Talkum oder einem anderen Inertstoff mischt und in einer Schlagmühle zerkleinert, oder indem man b) 60 GT Wirkstoffe, 35 GT Talkum und 5 GT Haftmittel, z.B. ein Polysaccharid, in der gleichen Weise homogenisiert.

**Beispiel 2**

Ein in Wasser leicht dispergierbares, benetzbares Pulver wird erhalten, indem man 25 GT Wirkstoffe 64 GT kaolinhaltigen Quarz als Inertstoff, 10 GT ligninsulfonsaures Kalium und 1 GT oleoylmethyltaurinsaures Natrium als Netz-und Dispergiermittel mischt und in einer Stiftmühle mahlt. Eine Formulierung mit 5% Wirkstoffgehalt kann wie folgt zusammengesetzt sein : 5% Wirkstoffe, 6% eines sulfonierten Naphthalinformaldehydkondensats (z.B. (R)Dispersogen A der HOECHST AG), 2% eines Na-Salzes einer Alkylnaphthalinsulfonsäure (z.B. (R)Leonil DB der HOECHST AG), 5% eines Gemisches aus Polypropylenglykol und $SiO_2$ (z.B. (R)Acrotin 341 der HOECHST AG), 25% $SiO_2$ und 57% Kaolin.

**Beispiel 3**

Ein in Wasser leicht dispergierbares Dispersionskonzentrat wird erhalten, indem man 20 GT Wirkstoffe mit 6 GT eines Alkylphenolpolyglykolethers, 3 GT Isotridecanolpolyglykolether (8 Ethylenoxid-Einheiten) und 71 GT paraffinischem Mineralöl (Siedebereich ca. 255 bis über 377°C) mischt und in einer Reibkugelmühle auf eine Feinheit von unter 5 µm vermahlt.

**Beispiel 4**

Ein emulgierbares Konzentrat wird erhalten aus 15 GT Wirkstoffe, 75 GT Cyclohexanon als Lösemittel und 10 GT oxethyliertem Nonylphenol (10 Ethylenoxid-Einheiten) als Emulgator.

**Biologische Beispiele**

Die nachfolgenden Versuche wurden unter Gewächshausbedingungen durchgeführt.

In allen Fällen wurde bei den Kombinationen unterschieden zwischen dem errechneten und dem gefundenen Wirkungsgrad. Der errechnete, theoretisch zu erwartende Wirkungsgrad einer Kombination wird ermittelt nach der Formel von S.R. Colby : Calculation of synergistic and antagonistic responses of herbicide combinations, Weeds 15 (1967) 20-22.

Diese Formel lautet :

$$E = X + Y - \frac{X \cdot Y}{100}$$

wobei

X = % Schädigung durch Herbizid A bei x kg/ha Aufwandmenge ;

Y = % Schädigung durch Herbizid B bei y kg/ha Aufwandmenge ;
E = die zu erwartende Schädigung durch die Herbizide A + B bei x + y kg/ha

Ist die tatsächliche Schädigung größer als die rechnerisch zu erwartende, so ist die Wirkung der Kombination mehr als additiv, d.h. es liegt ein synergistischer Wirkungseffekt vor.

**Versuchsdurchführung**

Die Testpflanzen wurden im Gewächshaus in Töpfen angezogen. Die Applikation der Wirkstoffe erfolgte jeweils allein oder in Kombination (Tank-Mischungen) in den angegebenen Dosierungen als der Weizen (Triticum aestivum) das 4-5 Blattstadium und Galium aparine 5-10 cm Wuchshöhe erreicht hatten.

3 Wochen nach der Applikation wurde die herbizide Wirkung duch Bonitur der Pflanzen bewertet. Die Angaben beziehen sich auf %-Werte der Schädigung. Die Ergebnisse sind in der nachfolgenden Tabelle wiedergegeben, wobei die Werte in Klammern den nach der Colby-Formel errechneten Erwartungswerten entsprechen.

**Tabelle**

| | | Schädigung in % von | |
|---|---|---|---|
| Wirkstoff | Dosis [g AS/ha] | Galium aparine | Triticum aestivum |
| Ia | 15 | 0 | 0 |
| | 30 | 0 | 0 |
| | 50 | 0 | 0 |
| | 75 | 0 | 0 |
| | 100 | 0 | 0 |
| | 125 | 0 | 0 |
| | 150 | 0 | 0 |
| IIa | 5 | 20 | 0 |
| | 10 | 30 | 0 |
| | 12,5 | 34 | 0 |
| | 15 | 37 | 0 |
| | 25 | 43 | 0 |
| | 50 | 70 | 0 |
| IIb | 5 | 32 | 0 |
| | 10 | 38 | 0 |
| | 12,5 | 43 | 0 |
| | 15 | 50 | 0 |
| | 25 | 63 | 0 |
| | 50 | 89 | 0 |

| Wirkstoff(e) | Dosis [g AS/ha] | Schädigung in % von Galium aparine | Triticum aestivum |
|---|---|---|---|
| IIc | 7,5 | 20 | 0 |
| | 10 | 23 | 0 |
| | 15 | 30 | 0 |
| | 20 | 35 | 0 |
| | 25 | 41 | 0 |
| | 50 | 65 | 0 |
| IId | 5 | 0 | 0 |
| | 7,5 | 0 | 0 |
| | 10 | 0 | 0 |
| | 15 | 0 | 0 |
| | 20 | 15 | 0 |
| | 25 | 20 | 0 |
| Ia + IIc | 75 + 7,5 | 50 (20) | 0 |
| | 100 + 10 | 65 (23) | 0 |
| | 150 + 15 | 73 (30) | 0 |
| | 50 + 10 | 55 (23) | 0 |
| | 75 + 15 | 68 (30) | 0 |
| | 100 + 20 | 75 (35) | 0 |
| | 30 + 15 | 60 (30) | 0 |
| | 50 + 25 | 78 (41) | 0 |
| | 100 + 50 | 95 (65) | 0 |

| Wirkstoff(e) | Dosis [g AS/ha] | Schädigung in % von Galium aparine | Schädigung in % von Triticum aestivum |
|---|---|---|---|
| Ia + IIa | 50 + 5 | 62 (20) | 0 |
| | 100 + 10 | 82 (30) | 0 |
| | 150 + 15 | 88 (37) | 0 |
| | 50 + 10 | 83 (30) | 0 |
| | 75 + 15 | 87 (37) | 0 |
| | 125 + 25 | 95 (43) | 0 |
| | 25 + 12,5 | 75 (34) | 0 |
| | 50 + 25 | 90 (43) | 0 |
| | 100 + 50 | 100 (70) | 0 |
| Ia + IIb | 50 + 5 | 75 (32) | 0 |
| | 100 + 10 | 90 (38) | 0 |
| | 150 + 15 | 100 (50) | 0 |
| | 50 + 10 | 85 (38) | 0 |
| | 75 + 15 | 95 (50) | 0 |
| | 125 + 25 | 100 (63) | 0 |
| | 25 + 12,5 | 80 (43) | 0 |
| | 50 + 25 | 100 (63) | 0 |
| | 100 + 50 | 100 (89) | 0 |

| Wirkstoff(e) | Dosis [g AS/ha] | Schädigung in % von Galium aparine | Schädigung in % von Triticum aestivum |
|---|---|---|---|
| Ia + IId | 50 + 5 | 30 (0) | 0 |
| | 100 + 10 | 45 (0) | 0 |
| | 150 + 15 | 52 (0) | 0 |
| | 50 + 10 | 40 (0) | 0 |
| | 75 + 15 | 48 (0) | 0 |
| | 100 + 20 | 55 (15) | 0 |
| | 15 + 7,5 | 30 (0) | 0 |
| | 30 + 15 | 37 (0) | 0 |
| | 50 + 25 | 50 (20) | 0 |

[g AS] = Grammenge der aktiven Substanz

Ia = 2-(4-(6-Chlorbenzoxazol-2-yloxy)phenoxy)propionsäureethylester
IIa = 3-(4,6-Dimethoxy-2-pyrimidinyl)-1-[(N-methyl-N-methylsulfonyl)aminosulfonyl]-harnstoff
IIb = 3-(4,6-Dimethoxy-2-pyrimidinyl)-1-[(N-methyl-N-ethylsulfonyl)aminosulfonyl]-harnstoff
IIc = Methyl-3-[(4-methoxy-6-methyl-1,3,5-triazin-2-yl)-aminocarbonyl-aminosulfonyl]-2-thiophencarbo xylat
IId = Methyl-2-[(4-methoxy-6-methyl-1,3,5-triazin-2-yl)-aminocarbonyl-aminosulfonyl]-benzoat

## Patentansprüche

## Patentansprüche für folgende Vertragsstaaten : AT, BE, CH, DE, FR, GB, GR, IT, LI, NL, SE

1. Herbizide Mittel, gekennzeichnet durch einen wirksamen Gehalt einer Verbindung der Formel I, deren Salz oder deren Stereoisomere,

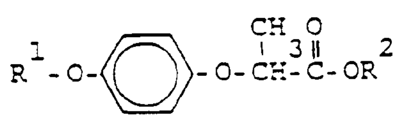

(I)

worin

$R^1$ = einen heterocyclischen Rest der Formel

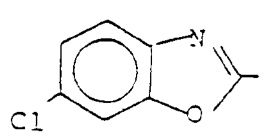

und

$R^2$ = H, ($C_1$-$C_4$) Alkyl, das durch ($C_1$-$C_4$) Alkoxy substituiert sein kann, oder ($C_2$-$C_4$) Alkinyl bedeuten, in Kombination mit einer Sulfonylharnstoffverbindung der Formel II oder deren Salz

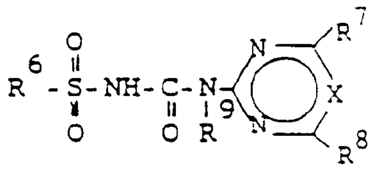

(II)

worin

$R^6$ = einen Rest der Formel

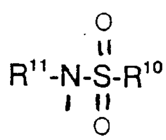

oder Phenyl, das durch ($C_1$-$C_4$) Alkyl, Halogen, halogeniertes ($C_1$-$C_4$) Alkoxy oder ($C_1$-$C_4$) Alkoxycarbonyl substituiert ist, oder Thienyl, das durch ($C_1$-$C_4$) Alkoxycarbonyl substituiert ist,

$R^7$, $R^8$ = unabhängig voneinander ($C_1$-$C_4$) Alkyl oder ($C_1$-$C_4$) Alkoxy,

$R^9$ = ($C_1$-$C_4$) Alkyl oder Wasserstoff,

$R^{10}$ = ($C_1$-$C_6$) Alkyl, ($C_2$-$C_6$) Alkenyl, ($C_2$-$C_6$) Alkinyl oder ($C_1$-$C_6$) Alkyl, das durch ($C_1$-$C_4$) Alkoxy oder ($C_1$-$C_4$) Alkoxycarbonyl substituiert ist,

$R^{11}$ = H, ($C_1$-$C_6$) Alkyl, ($C_2$-$C_6$) Alkenyl, ($C_2$-$C_6$) Alkinyl oder Cyclohexyl und

X = CH oder N bedeuten, mit Ausnahme der Kombination der Verbindung der Formel I, worin $R^2$ = $C_2H_5$ bedeutet, mit der Verbindung der Formel II, worin $R^6$ = 2-(2-Chlorethoxy)-phenyl, X = N, einer der Reste $R^7$ und $R^8$ Methyl und der andere Methoxy und $R^9$ = Wasserstoff bedeuten.

2. Herbizide Mittel gemäß Anspruch 1, dadurch gekennzeichnet, daß sie als Verbindung der Formel I 2-(4-(6-Chlorbenzoxazol-2-yloxy)phenoxy)propionsäureethylester enthalten.

3. Herbizide Mittel gemäß Anspruch 1 oder 2, dadurch gekennzeichnet, daß sie als Wirkstoff der Formel II eine Verbindung, worin $R^6$ = —$NR^{11}$ ($SO_2R^{10}$), $R^7$, $R^8$ = $CH_3$ oder $OCH_3$, $R^{10}$, $R^{11}$ = ($C_1$-$C_6$) Alkyl und X = CH bedeuten oder eine Verbindung der Gruppe Methyl-3-[(4-methoxy-6-methyl-1,3,5-triazin-2-yl-aminocarbonyl-aminosulfonyl]-2-thiophencarboxylat, Methyl-2-[(4-methoxy-6-methyl-1,3,5-triazin-2-yl)aminocarbonyl-aminosulfonyl] benzoat, 2-Chlor-N-((4-methoxy-6-methyl-1,3,5-triazin-2-yl)aminocarbonyl)-benzosulfonamid, 2-(2-Chlorethoxy)-N-((4-methoxy-6-methyl-1,3,5-triazin-2-yl)aminocarbonyl)-benzosulfonamid, Methyl-2-((3-(4-methoxy-6-methyl-1,3,5-triazin-2-yl)-3-methylaminocarbonyl)aminosulfonyl)benzoat oder Methyl-2-[(4,6-dimethoxypyrimidin-2-yl)aminocarbonyl-aminosulfonyl-methyl] benzoat enthalten.

4. Herbizide Mittel gemäß einem oder mehreren der Ansprüche 1-3, dadurch gekennzeichnet, daß das Gewichtsverhältnis der Verbindungen der Formel I zu dem der Verbindungen der Formel II zwischen 15 : 1 und 1 : 1 variiert.

5. Herbizide Mittel gemäß einem oder mehreren der Ansprüche 1-4, dadurch gekennzeichnet, daß das Gewichtsverhältnis der Verbindungen der Formel I zu dem der Verbindungen der Formel II zwischen 10 : 1 und 5 : 1 variiert.

6. Verfahren zur Bekämpfung von Schadpflanzen in Nutzpflanzenkulturen, dadurch gekennzeichnet, daß man auf die Schadpflanzen oder die Anbaufläche eine wirksame Menge eines Mittels gemäß einem oder mehreren der Ansprüche 1-5 appliziert.

**Patentansprüche für folgenden Vertragsstaat : ES**

1. Verfahren zur Bekämpfung von Schadpflanzen in Nutzpflanzenkulturen, dadurch gekennzeichnet, daß man auf die Schadpflanzen oder die Anbaufläche eine wirksame Menge eines herbiziden Mittels appliziert, das eine Verbindung der Formel I, deren Salz oder Stereoisomere

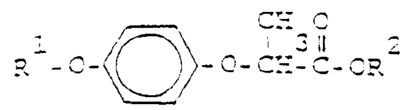

(I)

worin

R¹ = einen heterocyclischen Rest der Formel

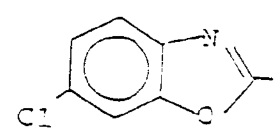

und

R² = H, ($C_1$-$C_4$) Alkyl, das durch ($C_1$-$C_4$) Alkoxy substituiert sein kann, oder ($C_2$-$C_4$) Alkinyl bedeuten, in Kombination mit einer Sulfonylharnstoffverbindung der Formel II oder deren Salz

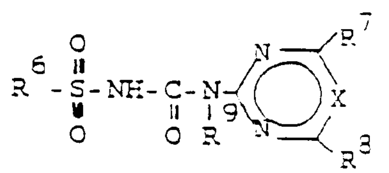

(II)

worin

R⁶ = einen Rest der Formel

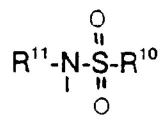

oder Phenyl, das durch ($C_1$-$C_4$) Alkyl, Halogen, halogeniertes ($C_1$-$C_4$) Alkoxy oder ($C_1$-$C_4$) Alkoxycarbonyl substituiert ist, oder Thienyl, das durch ($C_1$-$C_4$) Alkoxycarbonyl substituiert ist,

$R^7$, $R^8$ = unabhängig voneinander ($C_1$-$C_4$) Alkyl oder ($C_1$-$C_4$) Alkoxy,

$R^9$ = ($C_1$-$C_4$) Alkyl oder Wasserstoff,

$R^{10}$ = ($C_1$-$C_6$) Alkyl, ($C_2$-$C_6$) Alkenyl, ($C_2$-$C_6$) Alkinyl oder ($C_1$-$C_6$) Alkyl, das durch ($C_1$-$C_4$) Alkoxy oder ($C_1$-$C_4$) Alkoxycarbonyl substituert ist,

$R^{11}$ = H, ($C_1$-$C_6$) Alkyl, ($C_2$-$C_6$) Alkenyl, ($C_2$-$C_6$) Alkinyl oder Cyclohexyl und

X = CH oder N bedeuten, mit Ausnahme der Kombination der Verbindung der Formel I, worin $R^2$ = $C_2H_5$ bedeutet, mit der Verbindung der Formel II, worin $R^6$ = 2-(2-Chlorethoxy)-phenyl, X = N, einer der Reste $R^7$ und $R^8$ Methyl und der andere Methoxy und $R^9$ = Wasserstoff bedeuten, enthält.

2. Verfahren gemäß Anspruch 1, dadurch gekennzeichnet, daß als Verbindung der Formel I 2-(4-(6-Chlorbenzoxazol-2-yloxy)phenoxy)propionsäureethylester eingesetzt wird.

3. Verfahren gemäß Anspruch 1 oder 2, dadurch gekennzeichnet, daß als Wirkstoff der Formel II eine Verbindung, worin $R^6$ = —$NR^{11}$ ($SO_2R^{10}$), $R^7$, $R^8$ = $CH_3$ oder $OCH_3$, $R^{10}$, $R^{11}$ = ($C_1$-$C_6$) Alkyl und X = CH bedeuten oder eine Verbindung der Gruppe Methyl-3-[(4-methoxy-6-methyl-1,3,5-triazin-2-yl-aminocarbonyl-aminosulfonyl]-2-thiophencarboxylat, Methyl-2-[(4-methoxy-6-methyl-1,3,5-triazin-2-yl)aminocarbonyl-aminosulfonyl]benzoat, 2-Chlor-N-((4-methoxy-6-methyl-1,3,5-triazin-2-yl)aminocarbonyl)-benzosulfonamid, 2-(2-Chlorethoxy)-N-((4-methoxy-6-methyl-1,3,5-triazin-2-yl)aminocarbonyl)-benzosulfonamid, Methyl-2-((3-(4-methoxy-6-methyl-1,3,5-triazin-2-yl)-3-methylaminocarbonyl)aminosulfonyl)benzoat oder Methyl-2-[(4,6-dimethoxypyrimidin-2-yl)aminocarbonyl-aminosulfonylmethyl]benzoat eingesetzt wird.

4. Verfahren gemäß einem oder mehreren der Ansprüche 1-3, dadurch gekennzeichnet, daß das Gewichtsverhältnis der Verbindungen der Formel I zu dem der Verbindungen der Formel II zwischen 15 : 1 und 1 : 1 variiert.

5. Verfahren gemäß einem oder mehreren der Ansprüche 1-4, dadurch gekennzeichnet, daß das Gewichtsverhältnis der Verbindungen der Formel I zu dem der Verbindungen der Formel II zwischen 10 : 1 und 5 : 1

variiert.

## Claims

### Claims for the following Contracting States : AT, BE, CH, DE, FR, GB, GR, IT, LI, NL, SE

1. A herbicidal agent containing an effective amount of a compound of the formula I, its salt or its stereoisomers

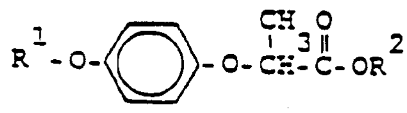

(I)

where

R¹ denotes a heterocyclic radical of the formula

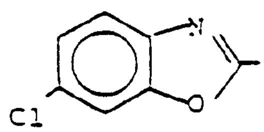

and

$R^2$ denotes H, ($C_1$-$C_4$) alkyl which can be substituted by ($C_1$-$C_4$) alkoxy, or denotes ($C_2$-$C_4$) alkynyl, in combination with a sulfonylurea compound of the formula II or its salt

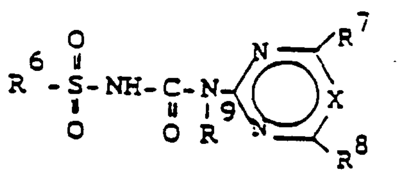

(II)

where

$R^6$ denotes a radical of the formula

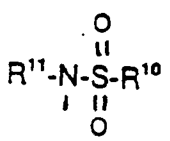

or phenyl which is substituted by ($C_1$-$C_4$) alkyl, halogen, halogenated ($C_1$-$C_4$) alkoxy or ($C_1$-$C_4$)-alkoxycarbonyl, or thienyl which is substituted by ($C_1$-$C_4$)-alkoxycarbonyl,

$R^7$ and $R^8$ independently of one another denote ($C_1$-$C_4$)-alkyl or ($C_1$-$C_4$) alkoxy,

$R^9$ denotes ($C_1$-$C_4$) alkyl or hydrogen,

$R^{10}$ denotes ($C_1$-$C_6$) alkyl, ($C_2$-$C_6$) alkenyl, ($C_2$-$C_6$) alkynyl or ($C_1$-$C_6$) alkyl which is substituted by ($C_1$-$C_4$)-alkoxy or ($C_1$-$C_4$) alkoxycarbonyl,

$R^{11}$ denotes H, ($C_1$-$C_6$) alkyl, ($C_2$-$C_6$) alkenyl, ($C_2$-$C_6$)-alkynyl or cyclohexyl and

X denotes CH or N, with the exception of the combination of the compound of the formula I where $R^2$ is $C_2H_5$, with the compound of the formula II where $R^6$ is 2-(2-chloroethoxy) phenyl, X is N, one of the radicals $R^7$ and $R^8$ is methyl and the other is methoxy and $R^9$ is hydrogen.

2. The herbicidal agent as claimed in claim 1, containing ethyl 2-(4-(6-chlorobenzoxazol-2-yloxy)-phenoxy) propionate as the compound of the formula I.

3. The herbicidal agent as claimed in claim 1 or 2, containing, as the active substance of the formula II, a

compound wherein $R^6$ denotes —$NR^{11}$ ($SO_2R^{10}$), $R^7$ and $R^8$ denote $CH_3$ or $OCH_3$, $R^{10}$ and $R^{11}$ denote ($C_1$-$C_6$)-alkyl and X denotes CH, or a compound of the group comprising methyl-3-[(4-methoxy-6-methyl-1,3,5-triazin-2-ylaminocarbonylaminosulfonyl]-2-thiophenecarboxylate, methyl-2-[(4-methoxy-6-methyl-1,3,5-triazin-2-yl) aminocarbonylaminosulfonyl] benzoate, 2-chloro-N-((4-methoxy-6-methyl-1,3,5-triazin-2-yl)-aminocarbonyl) benzosulfonamide, 2-(2-chloroethoxy)-N-((4-methoxy-6-methyl-1,3,5-triazin2-yl) aminocarbonyl) benzosulfonamide, methyl 2-((3-(4-methoxy-6-methyl-1,3,5-triazin-2-yl)-3-methylaminocarbonyl)-aminosulfonyl) benzoate or methyl 2-[(4,6-dimethoxypyrimidin-2-yl) aminocarbonylaminosulfonylmethyl]-benzoate.

4. The herbicidal agent as claimed in one or more of claims 1 to 3, wherein the ratio by weight of the compounds of the formula I to that of the compounds of the formula II varies from 15 : 1 to 1 : 1.

5. The herbicidal agent as claimed in one or more of claims 1-4, wherein the ratio by weight of the compounds of the formula II to that of the compounds of the formula II varies from 10 : 1 to 5 : 1.

6. A method for combating noxious plants in crops of useful plants, which comprises applying, to the noxious plants or to the area under cultivation, an effective amount of an agent as claimed in one or more of claims 1-5.

**Claims for the following Contracting State : ES**

1. A method of combating noxious plants in crops of useful plants, which comprises applying, to the noxious plants or to the area under cultivation, an effective amount of herbicidal agent containing a compound of the formula I, its salt or its stereoisomers

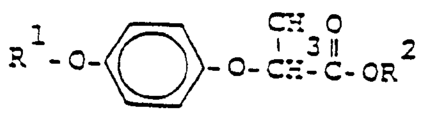

(I)

wherein

$R^1$ denotes a heterocyclic radical of the formulae

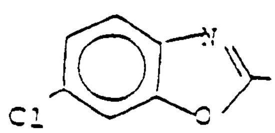

or and

$R^2$ denotes H, ($C_1$-$C_4$) alkyl which can be substituted by ($C_1$-$C_4$) alkoxy, or denotes ($C_2$-$C_4$) alkynyl, in combination with a sulfonylurea compound of the formula II or its salt

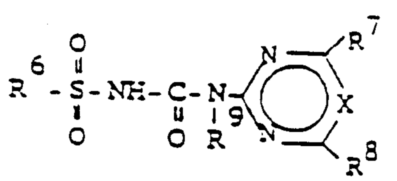

(II)

wherein

$R^6$ denotes a radical of the formula

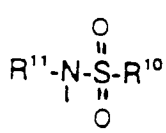

or phenyl which is substituted by ($C_1$-$C_4$) alkyl, halogen, halogenated ($C_1$-$C_4$) alkoxy or ($C_1$-$C_4$)-alkoxycarbonyl, or thienyl which is substituted by ($C_1$-$C_4$)-alkoxycarbonyl,

$R^7$ and $R^8$ independently of one another denote ($C_1$-$C_4$) alkyl or ($C_1$-$C_4$) alkoxy,

$R^9$ denotes ($C_1$-$C_4$) alkyl or hydrogen,

$R^{10}$ denotes ($C_1$-$C_6$) alkyl, ($C_2$-$C_6$) alkenyl, ($C_2$-$C_6$) alkynyl or ($C_1$-$C_6$) alkyl which is substituted by ($C_1$-

C4)-alkoxy or ($C_1$-$C_4$) alkoxycarbonyl,

$R^{11}$ denotes H, ($C_1$-$C_6$) alkyl, ($C_2$-$C_6$) alkenyl, ($C_2$-$C_6$)-alkynyl or cyclohexyl and

X denotes CH or N, with the exception of the combination of the compound of the formula I where $R^2$ is $C_2H_5$, with the compound of the formula II where $R^6$ is 2-(2-chloroethoxy) phenyl, X is N, one of the radicals $R^7$ and $R^8$ is methyl and the other is methoxy and $R^9$ is hydrogen.

2. The method as claimed in claim 1, wherein ethyl 2-(4-(6-chlorobenzoxazol-2-yloxy)phenoxy)propionate is used as the compound of the formula I.

3. The method as claimed in claim 1 or 2, wherein the active substance of the formula II used is a compound wherein $R^6$ denotes —$NR^{11}$ ($SO_2R^{10}$), $R^7$ and $R^8$ denote $CH_3$ or $OCH_3$, $R^{10}$ and $R^{11}$ denote ($C_1$-$C_6$) alkyl and X denotes CH, or a compound of the group comprising methyl-3-[(4-methoxy-6-methyl-1,3,5-triazin-2-ylaminocarbonylaminosulfonyl]-2-thiophenecarboxylate, methyl-2-[(4-methoxy-6-methyl-1,3,5-triazin-2-yl)-aminocarbonylaminosulfonyl] benzoate, 2-chloro-N-((4-methoxy-6-methyl-1,3,5-triazin-2-yl)-aminocarbonyl) benzosulfonamide, 2-(2-chloroethoxy)N-((4-methoxy-6-methyl-1,3,5-triazin-2-yl) aminocarbonyl) benzosulfonamide, methyl 2-((3-(4-methoxy-6-methyl-1,3,5-triazin-2-yl)-3-methylaminocarbonyl)-aminosulfonyl) benzoate or methyl 2-[(4,6-dimethoxypyrimidin-2-yl)aminocarbonylaminosulfonylmethyl] benzoate.

4. The method as claimed in one or more of claims 1 to 3, wherein the ratio by weight of the compounds of the formula I to that of the compounds of the formula II varies from 15 : 1 to 1 : 1.

5. The method as claimed in one or more of claims 1-4, wherein the ratio by weight of the compounds of the formula I to that of the compounds of the formula II varies from 10 : 1 to 5 : 1.

## Revendications

### Revendications pour les Etats contractants suivants : AT, BE, CH, DE, FR, GB, GR, IT, LI, NL, SE

1. Produits herbicides caractérisés en ce qu'ils contiennent une quantité efficace d'un composé de Formule I, d'un de ses sels ou de ses stéréo-isomères :

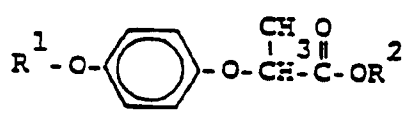

(I)

formule dans laquelle

$R^1$ représente un radical hétérocyclique de Formule :

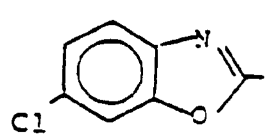

et

$R^2$ représente H, un alkyle en $C_1$-$C_4$ éventuellement porteur d'un alcoxy en $C_1$-$C_4$, ou un alcynyle en $C_2$-$C_4$, associé à une sulfonylurée de Formule II ou à un de ses sels :

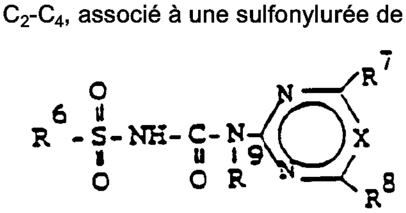

(II)

formule dans laquelle

$R^6$ représente un radical

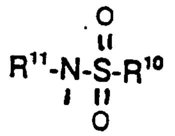 ,

un phényle porteur d'un alkyle en $C_1$-$C_4$, d'un halogène, d'un alcoxy en $C_1$-$C_4$ halogéné ou d'un alcoxycarbonyle à alcoxy en $C_1$-$C_4$, ou un thiényle porteur d'un alcoxycarbonyle à alcoxy en $C_1$-$C_4$,

$R^7$ et $R^8$ représentent chacun, indépendamment l'un de l'autre, un alkyle en $C_1$-$C_4$ ou un alcoxy en $C_1$-$C_4$,

$R^9$ représente un alkyle en $C_1$-$C_4$ ou l'hydrogène,

$R^{10}$ représente un alkyle en $C_1$-$C_6$, un alcényle en $C_2$-$C_6$, un alcynyle en $C_2$-$C_6$ ou un alkyle en $C_1$-$C_6$ qui porte un alcoxy en $C_1$-$C_4$ ou un alcoxycarbonyle à alcoxy en $C_1$-$C_4$,

$R^{11}$ représente H, un alkyle en $C_1$-$C_6$, un alcényle en $C_2$-$C_6$, un alcynyle en $C_2$-$C_6$ ou un cyclohexyle et

X représente CH ou N, à l'exception de l'association constituée du composé de Formule I dans lequel $R^2$ représente $C_2H_5$ et du composé de Formule II dans lequel $R^6$ représente un radical (chloro-2 éthoxy)-2 phényle, X représente N, l'un des symboles $R^7$ et $R^8$ représente un méthyle et l'autre un méthoxy, et $R^9$ représente l'hydrogène.

2. Produits herbicides selon la revendication 1 caractérisés en ce qu'ils contiennent, comme composé de Formule I, le [(chloro-6 benzoxazolyl-2 oxy)-4 phénoxy]-2 propionate d'éthyle.

3. Produits herbicides selon l'une des revendications 1 et 2, caractérisés en ce qu'ils contiennent, comme matière active de Formule II, un composé dans lequel $R^6$ représente un radical —$NR^{11}(SO_2R^{10})$, $R^7$ et $R^8$ représentent chacun $CH_3$ et $OCH_3$, $R^{10}$ et $R^{11}$ représentent chacun un alkyle en $C_1$-$C_6$ et X représente CH, ou un composé pris dans l'ensemble comprenant le [(méthoxy-4 méthyl-6 triazine-1,3,5 yl-2)-aminocarbonylamino-sulfonyl]-3 thiophène-carboxylate-2 de méthyle, le [(méthoxy-4 méthyl-6 triazine-1,3,5 yl-2)-aminocarbonylamino-sulfony]-2 benzoate de méthyle, le chloro-2 N-[(méthoxy-4 méthyl-6 triazine-1,3,5 yl-2)-aminocarbonyl]-benzène-sulfonamide, le (chloro-2 éthoxy)-2 N-[(méthoxy-4 méthyl-6 triazine-1,3,5 yl-2)aminocarbonyl]-benzène-sulfonamide, le [(méthoxy-4 méthyl-6 triazine-1,3,5 yl-2)-3 méthyl-3 aminocarbonylamino-sulfonyl]-2 benzoate de méthyle, et le [(diméthoxy-4,6 pyrimidinyl-2)-aminocarbonylaminosulfonyl-méthyl]-2 benzoate de méthyle.

4. Produits herbicides selon l'une quelconque des revendications 1 à 3, caractérisés en ce que le rapport entre le poids des composés de Formule I et celui des composés de Formule II est compris entre 15 : 1 et 1 : 1.

5. Produits herbicides selon l'une quelconque des revendications 1 à 4, caractérisés en ce que le rapport entre le poids des composés de Formule I et celui des composés de Formule II est compris entre 10 : 1 et 5 : 1.

6. Procédé pour combattre des plantes nuisibles dans des cultures de plantes utiles, procédé caractérisé en ce qu'on applique sur les plantes nuisibles ou sur la surface de culture une quantité efficace d'un produit selon l'une quelconque des revendications 1 à 5.

**Revendications pour l'Etat contractant suivant : ES**

1. Procédé pour combattre des plantes nuisibles dans des cultures de plantes utiles, procédé caractérisé en ce qu'on applique sur les plantes nuisibles ou sur la surface de culture une quantité efficace d'un produit herbicide qui contient un composé de Formule I, l'un de ses sels ou ses stéréo-isomères :

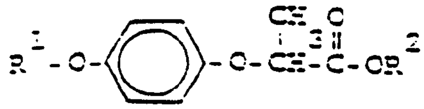 (I)

formule dans laquelle

$R^1$ représente un radical hétérocyclique de formule :

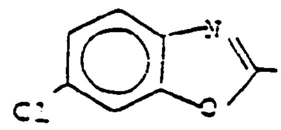

et

$R^2$ représente H, un allyle en $C_1$-$C_4$ éventuellement porteur d'un alcoxy en $C_1$-$C_4$, ou un alcynyle en $C_2$-$C_4$, associé à une sulfonylurée de Formule II ou à un de ses sels :

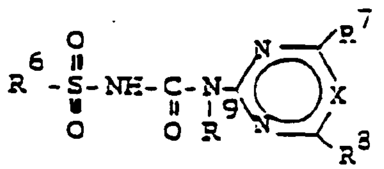

(II)

formule dans laquelle

$R^6$ représente un radical

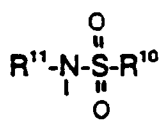

,

un phényle porteur d'un alkyle en $C_1$-$C_4$, d'un halogène, d'un alcoxy en $C_1$-$C_4$ halogéné ou d'un alcoxycarbonyle à alcoxy en $C_1$-$C_4$, ou un thienyle porteur d'un alcoxycarbonyle à alcoxy en $C_1$-$C_4$,

$R^7$ et $R^8$ représentent chacun, indépendamment l'un de l'autre, un alkyle en $C_1$-$C_4$ ou un alcoxy en $C_1$-$C_4$,

$R^9$ représente un alkyle en $C_1$-$C_4$ ou l'hydrogène,

$R^{10}$ représente un alkyle en $C_1$-$C_6$, un alcényle en $C_2$-$C_6$, un alcynyle en $C_2$-$C_6$ ou un alkyle en $C_1$-$C_6$ qui porte un alcoxy en $C_1$-$C_4$ ou un alcoxycarbonyle à alcoxy en $C_1$-$C_4$,

$R^{11}$ représente H, un alkyle en $C_1$-$C_6$, un alcényle en $C_2$-$C_6$, un alcynyle en $C_2$-$C_6$ ou un cyclohexyle et

X représente CH ou N, à l'exception de l'association constituée du composé de Formule I dans lequel $R^2$ représente $C_2H_5$ et du composé de Formule II dans lequel $R^6$ représente un radical (chloro-2 éthoxy)-2 phényle, X représente N, l'un des symboles $R^7$ et $R^8$ représente un méthyle et l'autre un méthoxy, et $R^9$ représente l'hydrogène.

2. Procédé selon la revendication 1 caractérisé en ce qu'on utilise, comme composé de Formule I, le [(chloro-6 benzoxazolyl-2 oxy)-4 phénoxy]-2 propionate d'éthyle.

3. Procédé selon l'une des revendications 1 et 2, caractérisé en ce qu'on utilise, comme composé de Formule II, un composé dans lequel $R^6$ représente un radical $—NR^{11}(SO_2R^{10})$, $R^7$ et $R^8$ représentent chacun $CH_3$ et $OCH_3$, $R^{10}$ et $R^{11}$ représentent chacun un alkyle en $C_1$-$C_6$ et X représente CH, ou un composé pris dans l'ensemble comprenant le [(méthoxy-4 méthyl-6 triazine1,3,5 yl-2)-aminocarbonylamino-sulfonyl]-3 thiophène-carboxylate-2 de méthyle, le [(méthoxy-4 méthyl-6 triazine-1,3,5 yl-2)-aminocarbonylamino-sulfony]-2 benzoate de méthyle, le chloro-2 N-[(méthoxy-4 méthyl-6 triazine-1,3,5 yl-2)-aminocarbonyl]-benzène-sulfonamide, le (chloro-2 éthoxy)-2 N-[(méthoxy-4 méthyl-6 triazine1,3,5 yl-2)-aminocarbonyl]-benzène-sulfonamide, le [(méthoxy-4 méthyl-6 triazine-1,3,5 yl-2)-3 méthyl-3 aminocarbonylamino-sulfonyl]-2 benzoate de méthyle, et le [(diméthoxy-4,6 pyrimidinyl-2)-aminocarbonylaminosulfonyl-méthyl]-2 benzoate de méthyle.

4. Procédé selon l'une quelconque des revendications 1 à 3, caractérisé en ce que le rapport entre le poids des composés de Formule I et celui des composés de Formule II est compris entre 15 : 1 et 1 : 1.

5. Procédé selon l'une quelconque des revendications 1 à 4, caractérisé en ce que le rapport entre le poids des composés de Formule I et celui des composés de Formule II est compris entre 10 : 1 et 5 : 1.